# EUROPEAN PATENT APPLICATION

(11) **EP 4 810 335 A1**
(43) Date of publication of application: **23.09.2026**
(21) Application number: 26158498.1
(22) Date of filing: 13.02.2026
(51) Int. Cl.: B60T 13/74

(54) **BRAKE, METHOD, COMPUTER PROGRAM PRODUCT AND COMPUTER-READABLE STORAGE MEDIUM**

(30) Priority: 24.02.2025 GB 202502622
(71) Applicant: Meritor Heavy Vehicle Braking Systems (UK) Limited, Cwmbran, Gwent NP44 3XU (GB)
(72) Inventor: Thomas, Paul, Cwmbran Gwent, NP44 3XU (GB); Cleary, Sean, Cwmbran Gwent, NP44 3XU (GB); Duggan, Simon, Cwmbran Gwent, NP44 3XU (GB); Austin, Benjamin, Cwmbran Gwent, NP44 3XU (GB); Mat, Alexander Sui-Phu, Cwmbran Gwent, NP44 3XU (GB); Boughtwood, Martin, Cwmbran Gwent, NP44 3XU (GB)
(74) Representative: Whitfield, Jack Stephen

(57) **Abstract**

Aspects of the present invention relate to a brake (100) for providing deceleration, comprising:
a brake surface (110) and a brake lining (120), wherein in a decelerating state (I), the brake lining (120) and the brake surface (110) are in contact, and in a free-running state (II), the brake lining (120) and the brake surface (110) are spaced apart,
an electric motor (140) that is connected to an actuator push rod (130) and configured to provide the energy to move the actuator push rod (130) from the free-running state (II) to the decelerating state (I),
wherein the electric motor (140) is further configured to operate as a generator and provide energy to an energy storage (150) when the actuator push rod (130) is moved from the decelerating state (I) to the free-running state (II). Further aspects relate to method (200), computer program product and computer-readable storage medium.

## Description

### Technical Field

This application claims priority to GB Patent Application 2502622.0 filed at the UKIPO on 24 February 2025 entitled "Brake, method, computer program product and computer-readable storage medium". The present disclosure relates to a brake, a method, a computer program product and a computer-readable storage medium.

### Background

Braking systems, used for vehicle speed control and safety, traditionally consist of a brake surface and pad. When applied, the brake lining contacts the brake surface, creating friction that slows or stops the vehicle, with the energy generated dissipated as heat.

The current standard for braking vehicles is the use of mechanically actuated brakes. However, these types of brakes have been found to be imprecise and slow, which results in less than optimal performance.

The present invention aims to provide one or more improvements over the prior art.

### Summary of Invention

Aspects and embodiments of the invention provide a brake, a method, a computer program product and a computer-readable storage medium as claimed in the appended claims.

According to the invention, a brake is provided for providing deceleration, in particular of a vehicle, comprising a brake surface and a brake lining, wherein in a decelerating state, the brake lining and the brake surface are in contact, and in a free-running state, the brake lining and the brake surface are spaced apart, an electric motor that is connected to an actuator push rod and configured to provide the energy to move the actuator push rod from the free-running state to the decelerating state, wherein the electric motor is further configured to operate as a generator and provide energy to an energy storage when the actuator push rod is moved from the decelerating state to the free-running state.

In other words, a braking system may be provided that is designed to facilitate deceleration, particularly for vehicles, having a brake surface and a brake lining, where in a deceleration mode, the brake lining contacts the brake surface, and in a free-running mode, the brake lining and brake surface are separated; an electric motor linked to an actuator push rod that supplies the energy necessary to transition the actuator push rod from the free-running mode to the deceleration mode, wherein the electric motor is also capable of functioning as a generator to supply energy to an energy storage when the actuator push rod shifts from the deceleration mode to the free-running mode.

A brake may be understood as a device that slows down or stops a vehicle by applying friction. It may consist of various components that work together to create the necessary force to decelerate the vehicle.

A brake surface may refer to a circular component, in particular formed of metal and/or ceramic, that rotates with the wheel and may be clamped by the brake lining to create friction, thereby slowing the vehicle. The interaction between the disc and the brake lining generates the necessary stopping power.

The brake surface may be a brake disc. Further, the brake lining may be a brake pad. In other words, the brake may be a disk brake. A disc brake may have the brake disc (as called rotor) attached to a wheel of the vehicle may have a caliper that houses brake pads. When a driver presses the brake pedal or an assistance system activates the brake, the brake goes into the decelerating state, wherein the brake pads are forced against the brake disc, creating friction that slows down the wheel.

Alternatively, the brake surface may be a brake drum. The brake lining may be a brake shoe. Put differently, the bake may be a drum brake. Drum brakes may have a brake drum attached to the wheel and brake shoes inside the drum. When a driver presses the brake pedal or an assistance system activates the brake, the brake goes into the decelerating state, wherein the brake shoes are pushed outward against the brake drum, creating friction that slows down the wheel.

The brake surface may be configured as a floating brake surface that can be moved in relation to a brake lining. The brake surface may be connected to a biasing means, in particular a spring. The biasing means may at least partially determine the position of the brake surface, in particular in the free-running state.

A brake lining may be understood as a component that presses against the brake surface to create friction and facilitate deceleration. The brake lining may be arranged on a brake caliper. The brake caliper may be configured as a floating (also called a "sliding") caliper or a fixed caliper. More than one brake lining may be provided. The brake lining and/or the brake caliper may be connected to a biasing means, in particular a spring. The biasing means may at least partially determine the position of the brake caliper, in particular in the free running state.

A decelerating state may refer to the condition in which the brake lining and brake surface are in contact, resulting in the vehicle slowing down. The decelerating state may encompass all states in which the vehicle decelerates, from the brake linings slightly touching the brake surface to the brake linings being pressed against the brake surface with all available power, e.g. during an emergency brake.

A free-running state may be understood as the condition in which the brake lining and brake surface are not in contact, allowing the vehicle to move without braking. This state is usually used for normal vehicle operation, especially when coasting or accelerating. It ensures that the braking system does not unnecessarily impede the vehicle's movement.

An actuator push rod may refer to a mechanical component that transmits force to move the brake lining and/or brake surface between the two states. The actuator push rod may be configured to move the brake lining and/or the brake surface between the decelerating state and the free-running state. It may be conceived as a part of the brake, enabling the transition between braking and free-running modes. The actuator push rod may be connected to the electric motor directly or through a gear. Similarly, the actuator push rod may directly move the brake lining and/or the brake surface, or via a gear or other mechanical components transferring the movement.

An electric motor may be understood as a device that converts electrical energy into mechanical energy to drive the actuator push rod. It may operate through the interaction between a magnetic field of the electric motor and an electric current in a wire winding to generate force in the form of torque applied on a shaft of the electric motor.

An energy storage may refer to a system or device that stores energy, in particular electric energy, for later use, such as batteries or capacitors. In other words, an energy storage may receive and release energy, in particular electric energy.

the electric motor has a hollow shaft design, wherein a rotor is tubular or cup-shaped, at least partially enclosing a stator and configured to drive the actuator push rod.

A hollow shaft design may be understood as a structural configuration where the shaft of the motor is hollow, allowing for a more compact design. This design can facilitate the integration of additional components, such as gears, within or adjacent to the motor. The hollow structure can also contribute to weight reduction and improved space efficiency in the overall system.

In the alternative, the electric motor may have a rotor that is at least partially surrounded by a stator.

A rotor may refer to the rotating part of the electric motor that interacts with the stator to generate motion. In this context, the rotor may designed to be tubular or cup-shaped, which can enhance the motor's efficiency and performance.

A stator may be understood as the stationary part of the electric motor that generates a magnetic field to interact with the rotor. The interaction between the stator and rotor produces the mechanical energy which drives the actuator push rod.

A hollow shaft design allows a compact design for more efficient use of space within the vehicle. Additionally, this design enables the arrangement of gears within or adjacent to the motor, potentially enhancing the overall performance and responsiveness of the brake. A design where the rotor is at least partially surrounded by the stator allows for a compact design when no cables or other connections have to be feed through an opening in the rotor.

In summary, the provided brake is precise, has a fast reaction and is energy efficient. The electric motor allows the quick and precise movement of the actuator push rod, which moves the brake linings and/or the brake surface between the decelerating and the free state. Further, the advantages of this brake include the ability of the electric motor to function as a generator, allowing for energy recovery when the actuator push rod transitions from the decelerating state to the free-running state. This recovered energy can be stored in the energy storage system and utilized for future braking actions or other applications.

It is conceivable that the actuator push rod is configured to drive a lever that is mechanically connected to the brake lining and/or the brake surface.

In another advantageous example, an inverter may be provided that is configured to provide alternating current to the electric motor for moving the actuator push rod from the free-running state to the decelerating state and to at least partially store and/or to convert the current generated by the electric motor so that it can be absorbed by the energy storage when the actuator push rod is moved from the decelerating state to the free-running state.

In other words, a brake may include an inverter designed to supply alternating current to the electric motor for transitioning the actuator push rod from the free-running state to the decelerating state, and to partially store and/or convert the current produced by the electric motor so that it can be stored in the energy storage when the actuator push rod shifts from the decelerating state to the free-running state.

An inverter may be understood as an electronic device that converts direct current (DC) into alternating current (AC).

With an inverter alternating current may be provided to the electric motor, which enhances operational efficiency. Additionally, the capability to store energy within the inverter contributes to a more compact and efficient design, optimizing space and performance within the brake.

It is conceivable that the inverter comprises at least one capacitor, in particular a super capacitor, that is configured to store electric energy that is generated by the electric motor.

In other words, the inverter may feature at least one capacitor, specifically a super capacitor, designed to store electric energy produced by the electric motor.

A capacitor may be understood as an electronic component that stores electrical energy in an electric field. It can charge very quickly and release energy extremely rapidly, making it particularly useful in applications where quick energy delivery is required. This capability is essential in systems that require rapid brake and release actions, such as when anti-lock braking systems (ABS) or other assistance systems are activated.

In particular, the capacitor may be configured as at least one of a double-layer capacitor (EDLCs), a pseudocapacitor or a hybrid capacitor.

EDLCs have a higher electrostatic double-layer capacitance than electrochemical pseudocapacitance. Pseudocapacitors have a transition metal oxide or conducting polymer electrodes with a high electrochemical pseudocapacitance. Hybrid capacitors may have asymmetric electrodes, one of which exhibits mostly electrostatic and the other mostly electrochemical capacitance, such as lithium-ion capacitors.

The advantages of this brake include the capacitor's ability to charge and discharge quickly, which is especially beneficial during rapid braking and releasing actions. This rapid response enhances the overall performance of the brake, ensuring that energy is available precisely when needed, thereby improving safety and efficiency.

It is further thinkable that a controller is provided that is configured to control the electric motor, in particular at least one of the direction of rotation, the frequency or voltage applied.

Put differently, the brake may include a controller designed to manage the electric motor, specifically controlling aspects such as the direction of rotation, frequency, or voltage applied.

A controller may be understood as an electronic device that regulates the operation of other components within a system. It can be configured to adjust various parameters, ensuring optimal performance and efficiency.

The advantages of this brake include the flexibility of the controller's placement, which can be integrated with the electric motor, inverter, or energy storage, or positioned separately from the brake. Additionally, the controller can be part of a broader vehicle system, particularly within an assistance system, allowing for coordinated control and improved overall vehicle performance.

In another example, the controller is configured to control the electric motor according to a control signal induced by at least one of a driver, an anti-lock braking system, or an assistance system of the vehicle.

In other words, a controller may be designed to manage the electric motor based on control signals generated by the driver, an anti-lock braking system, or other vehicle assistance systems.

A controller may be understood as an electronic device that regulates the operation of other components within a system. It can be configured to adjust various parameters, ensuring optimal performance and efficiency. In the context of braking systems, the controller plays a crucial role in managing the electric motor's functions to enhance braking effectiveness.

The advantages of a brake with this controller include the ability of the controller to respond dynamically to various inputs, such as those from the driver or vehicle assistance systems. This responsiveness allows for improved safety and performance, as the brake can adapt to different driving conditions and requirements in real-time, ensuring optimal braking performance when needed.

It is thinkable that the energy storage is configured to provide energy to drive the electric motor.

Put differently, the brake may include an energy storage designed to supply energy for operating the electric motor. In addition or in the alternative, the energy storage may also provide energy to other systems of the vehicle.

The advantages of this brake include the efficient usage of energy that is recovered when releasing the brake. This capability not only enhances the overall energy efficiency of the vehicle but also contributes to reduced energy consumption, making the brake more sustainable and cost-effective.

It is conceivable that the energy storage is at least configured as an accumulator or as a capacitor, in particular as a supercapacitor.

In other words, the energy storage may be configured as either an accumulator or a capacitor, specifically a supercapacitor.

An accumulator may be understood as a device that stores energy for later use, typically in the form of chemical energy. It is designed to hold large amounts of energy over extended periods, making it suitable for applications where energy needs to be stored and released gradually. This definition encompasses various types of batteries and energy storage technologies.

A supercapacitor may be understood as a type of capacitor that can store large amounts of energy and is capable of being charged almost instantly while also releasing energy very quickly. Supercapacitors bridge the gap between traditional capacitors and batteries, offering high power density and rapid charge/discharge cycles. This makes them particularly useful in for a brake, which may require quick energy delivery.

In particular, the capacitor may be configured as at least one of a double-layer capacitor (EDLCs), a pseudocapacitor or a hybrid capacitor.

The advantages of this brake include the ability to store energy effectively, with accumulators providing the capacity to hold large amounts of energy for extended periods. Supercapacitors, on the other hand, can be charged almost instantly and release energy rapidly, enhancing the overall responsiveness and efficiency of the brake.

It is also thinkable that the energy storage is at least a power source of the vehicle or a power source dedicated to the brake.

Put differently, the energy storage may serve as either a power source for the vehicle or a dedicated power source for the brake.

The advantages of this brake include the integration of energy storage as a power source, which can enhance the overall efficiency of the vehicle. By utilizing energy storage dedicated to the brake, the system can ensure that sufficient power is available for braking operations, improving responsiveness and reliability. This setup can also reduce the load on the vehicle's main power source, leading to better energy management and potentially extending the lifespan of the vehicle's power systems.

In another example, a mechanical energy storage may be provided that is configured to mechanically store at least a part of the energy that is generated by the electric motor to move the brake lining and/or the brake surface from the free-running state to the decelerating state.

In other words, a brake may include a mechanical energy storage designed to store a portion of the energy generated by the electric motor for the purpose of moving the brake lining and/or brake surface from the free-running state to the decelerating state.

The mechanical energy storage may be separate from the mechanical energy storage that is provided by the system of brake surface, brake lining and actuator push rod, which may also store mechanical energy e.g. by compression or twisting.

A mechanical energy storage may be understood as a system that retains energy in a mechanical form, such as through the compression of springs or the elevation of weights. This type of storage allows for the energy to be released when needed, providing a reliable source of power for various applications.

This provides the ability to store energy mechanically and release it to the electric motor when the motor operates as a generator. This capability not only improves energy efficiency but also contributes to the overall performance of the brake, ensuring that energy is available for braking actions when required.

In yet another example, the mechanical energy storage has an elastic part that stores mechanical energy in an elastic deformation.

Put differently, the mechanical energy storage may be featuring an elastic component designed to store mechanical energy through elastic deformation.

An elastic part may be understood as a component that can deform under stress and return to its original shape when the stress is removed. This property allows for the efficient storage of energy, as the elastic deformation can capture and release energy effectively.

The ability of the elastic part to store mechanical energy efficiently allows to provide energy for moving the electric motor to generate electric energy. Additionally, the use of elastic deformation can contribute to a more compact design, optimizing space within the brake.

It is also thinkable that the elastic part is configured as at least one of an elastic part of the brake lining and/or the brake surface, or a spring.

In other words, the elastic component may be part of the brake lining, brake surface, or a separate spring.

A brake of this kind with the versatility of the elastic part, allows the latter to be incorporated into various components such as the brake lining, brake surface, or as a standalone spring. This flexibility permits for optimized energy absorption and release, improving the overall responsiveness of the brake. Additionally, using elastic materials can help reduce wear on other components, leading to enhanced durability and maintenance efficiency.

It is also thinkable that the mechanical energy storage has a flywheel that stores mechanical energy in a rotation.

This means that the mechanical energy storage may be featuring a flywheel designed to store mechanical energy through rotational motion.

A flywheel may be understood as a mechanical device that stores energy in the form of kinetic energy by rotating at high speeds. This energy can be released when needed, providing a reliable source of power for various applications.

The flywheel can store significant amounts of energy in a compact form, allowing for quick release of energy when required. This capability can improve the overall efficiency and responsiveness of the brake, particularly during rapid braking events. Additionally, flywheels can contribute to smoother operation by providing a steady energy supply, reducing fluctuations in power delivery.

In another aspect of the invention, a method is provided for providing deceleration, in particular of a vehicle, with a brake, in particular a brake according to the invention, comprising providing a brake surface and a brake lining, wherein in a decelerating state, the brake lining and the brake surface are in contact, and in a free-running state, the brake lining and the brake surface are spaced apart, and an electric motor that is connected to an actuator push rod and configured to provide the energy to move the actuator push rod from the free-running state to the decelerating state, braking by moving the brake lining and/or the brake surface from the free-running state to the decelerating state through the actuator push rod that is driven by the electric motor, wherein the electric motor is at least partially powered by an energy storage, releasing by moving the brake lining and/or the brake surface from the decelerating state to the free-running state wherein the electric motor acts as a generator, wherein the generated energy is stored in the energy storage.

The method may be computer-implemented. It may be provided that the steps of the method are executed in the specified or a different order. It may also be provided that some or all of the steps of the method are executed repeatedly.

The method according to the invention offers all the advantages described in connection with the brake according to the invention.

In another example, controlling the electric motor may be provided according to a control signal induced by at least one of a driver, an anti-lock braking system, or an assistance system of the vehicle.

In other words, the method may include the additional step of managing the electric motor based on control signals generated by the driver, an anti-lock braking system, or other vehicle assistance systems.

This way, a dynamic response to various inputs from the driver or vehicle assistance systems can be provided. This responsiveness allows for improved safety and performance, ensuring that the brake can adjust to different driving conditions and requirements in real-time. By integrating control signals from multiple sources, the system can optimize braking performance, enhancing overall vehicle stability and driver confidence.

It is also conceivable that the method further comprises providing alternating current to the electric motor with an inverter for moving the actuator push rod from the free-running state to the decelerating state, and/or at least partially storing and/or converting the current generated by the electric motor so that it can be absorbed by the energy storage when the actuator push rod is moved from the decelerating state to the free-running state.

Put differently, the method may include the additional steps of supplying alternating current to the electric motor via an inverter to facilitate the movement of the actuator push rod from the free-running state to the decelerating state, and/or managing the current generated by the electric motor to ensure it can be stored in the energy storage when transitioning back to the free-running state.

This provides the advantage that an efficient operation of the electric motor is ensured, as providing alternating current allows for smoother and more effective control of the actuator push rod. Additionally, the ability to store and convert the generated current enhances the overall energy efficiency of the system, ensuring that energy is effectively captured and reused. This capability not only improves the performance of the brake but also contributes to the sustainability of the vehicle's energy management.

In another aspect of the invention, a computer program product is provided, comprising instructions which, when the program is executed by a computer, in particular a controller of a brake according to the invention, cause the computer to carry out the method according to the invention, in particular sending control signals to control the electric motor to braking and/or releasing.

Thus, the computer program product according to the invention offers all the advantages described in connection with the brake and/or the method according to the invention.

In yet another aspect of the invention, a computer-readable storage medium is provided, comprising instructions which, when the program is executed by a computer, in particular a controller of a brake according to the invention, cause the computer to carry out the method according to the invention, in particular sending control signals to control the electric motor to braking and/or releasing.

Thus, the computer-readable storage medium according to the invention offers all the advantages described in connection with the brake and/or the method and/or the computer program product according to the invention.

In a further aspect of the invention, a control system may be provided which comprises one or more controllers collectively comprising at least one electronic processor having an electrical input for receiving an input signal and at least one memory device electrically coupled to the at least one electronic processor and having instructions stored therein. The at least one electronic processor is configured to access the at least one memory device and execute the instructions thereon to carry out the method according to the invention.

Thus, the control system according to the invention offers all the advantages described in connection with the brake and/or the method and/or the computer program product and/or the computer-readable storage medium according to the invention.

Within the scope of this application, it is expressly intended that the various aspects, embodiments, examples and alternatives set out in the preceding paragraphs, in the claims and/or in the following description and drawings, and, in particular, the individual features thereof, may be taken independently or in any combination. All embodiments and/or features of any embodiment can be combined in any way and/or combination unless such features are incompatible. The applicant reserves the right to change any originally filed claim or file any new claim accordingly, including the right to amend any originally filed claim to depend from and/or incorporate any feature of any other claim, although not originally claimed in that manner.

Further benefits and advantages of the present invention will become apparent from the following detailed description of at least one exemplary embodiment for carrying out the present invention with reference to the accompanying drawings.

### Brief Description of Drawings

One or more embodiments of the invention will now be described, by way of example only, with reference to the accompanying drawings, in which:
Figure 1 is a schematic view of a brake in a free-running state;
Figure 2 is a schematic view of a brake in a decelerating state;
Figure 3 is a sectional view of an electric motor;
Figure 4 is an overview of a brake and electric connections;
Figure 5 is a brake with a mechanical energy storage; and
Figure 6 is a method for providing deceleration.

### Detailed Description

Aspects and embodiments of the invention provide a brake 100, a method 200, a computer program product and a computer-readable storage medium as claimed in the appended claims.

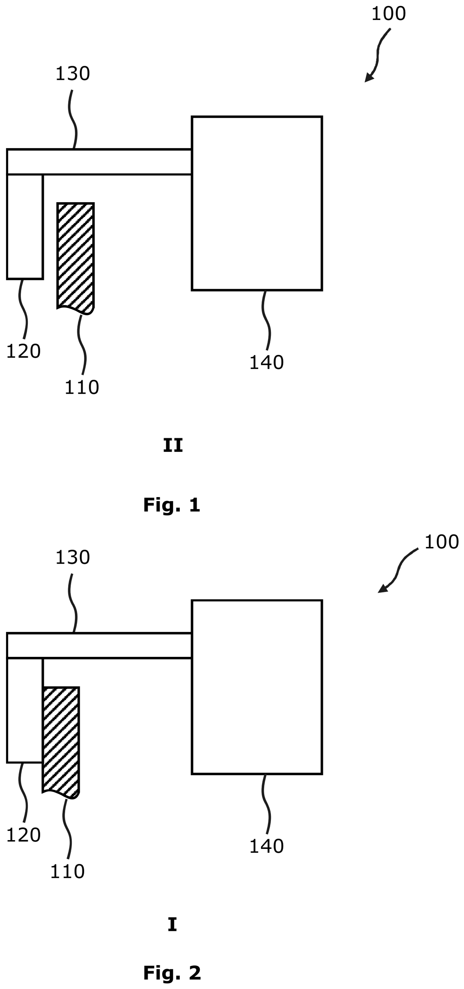

Fig. 1 and Fig. 2 show a brake 100 in a decelerating state I (Fig. 2), where a brake lining 120 and a brake surface 110 are in contact, and in a free-running state II (Fig. 1).

According to the invention, a brake 100 is provided for providing deceleration, in particular of a vehicle, comprising a brake surface 110 and a brake lining 120, wherein in a decelerating state I (see Fig. 2), the brake lining 120 and the brake surface 110 are in contact, and in a free-running state II (shown in Fig. 1), the brake lining 120 and the brake surface 110 are spaced apart, an electric motor 140 that is connected to an actuator push rod 130 and configured to provide the energy to move the actuator push rod 130 from the free-running state II to the decelerating state I, wherein the electric motor 140 is further configured to operate as a generator and provide energy to an energy storage 150 when the actuator push rod 130 is moved from the decelerating state I to the free-running state II.

In other words, a braking process 220 may be provided that is designed to facilitate deceleration, particularly for vehicles, having a brake surface 110 and a brake lining 120, where in a deceleration mode, the brake lining 120 contacts the brake surface 110, and in a free-running mode II, the brake lining 120 and brake surface 110 are separated; an electric motor 140 linked to an actuator push rod 130 that supplies the energy necessary to transition the actuator push rod 130 from the free-running mode II to the deceleration mode, wherein the electric motor 140 is also capable of functioning as a generator to supply energy to an energy storage 150 when the actuator push rod 130 shifts from the deceleration mode to the free-running mode II.

A brake 100 may be understood as a device that slows down or stops a vehicle by applying friction. It may consist of various components that are explicitly shown in the Figures that work together to create the necessary force to decelerate 200 the vehicle.

A brake surface 110, which is shown in Fig. 1 and Fig. 2, may refer to a circular component, in particular formed of metal and/or ceramic, that rotates with the wheel and may be clamped by the brake lining 120 to create friction, thereby slowing the vehicle.

The brake surface 110 may be a brake disc 110. Further, the brake lining 120 may be a brake pad 120. In other words, the brake 100 may be a disk brake 100. A disc brake 100 may have the brake disc 110 (as called rotor 110) attached to a wheel of the vehicle may have a caliper that houses brake pads 120. When a driver presses the brake pedal or an assistance system activates the brake 100, the brake 100 goes into the decelerating state I, wherein the brake pads 120 are forced against the brake disc 100, creating friction that slows down the wheel.

Alternatively, the brake surface 110 may be a brake drum 110. The brake lining 120 may be a brake shoe 120. Put differently, the bake 100 may be a drum brake 100. Drum brakes 100 may have a brake drum 110 attached to the wheel and brake shoes 120 inside the brake drum 110. When a driver presses the brake pedal or an assistance system activates the brake 100, the brake 100 goes into the decelerating state I, wherein the brake shoes 120 are pushed outward against the brake drum 110, creating friction that slows down the wheel.

The interaction between the brake surface 110 and the brake lining 120 generates the necessary stopping power. The brake surface 110 may be configured as a floating brake surface that can be moved in relation to a brake lining 120. The brake surface 110 may be connected to a biasing means (not shown in the Figures), in particular a spring. The biasing means may at least partially determine the position of the brake surface 110, in particular in the free-running state II.

A brake lining 120 may be understood as a component that presses against the brake surface 110 to create friction and facilitate deceleration 200. As can be seen in Fig. 1 and Fig. 2, the brake lining 120 may be arranged on a brake caliper 121. The brake caliper 121 may be configured as a floating (also called a "sliding") caliper or a fixed caliper. More than one brake lining 110 may be provided. The brake lining 120 and/or the brake caliper 121 may be connected to a biasing means, in particular a spring. The biasing means may at least partially determine the position of the brake caliper, in particular in the free-running state **II.**

A decelerating state I, which is shown in Fig. 2., may refer to the condition in which the brake lining 120 and brake surface 110 are in contact, resulting in the vehicle slowing down. The decelerating state I may encompass all states in which the vehicle decelerates 200, from the brake linings 120 slightly touching the brake surface 110 to the brake linings 120 being pressed against the brake surface 110 with all available power, e.g., during an emergency brake.

In contrast, a free-running state II, which is shown in Fig. 1, may be understood as the condition in which the brake lining 120 and brake surface 110 are not in contact, allowing the vehicle to move without braking. This state is usually used for normal vehicle operation, especially when coasting or accelerating. It ensures that the brake does not unnecessarily impede the vehicle's movement.

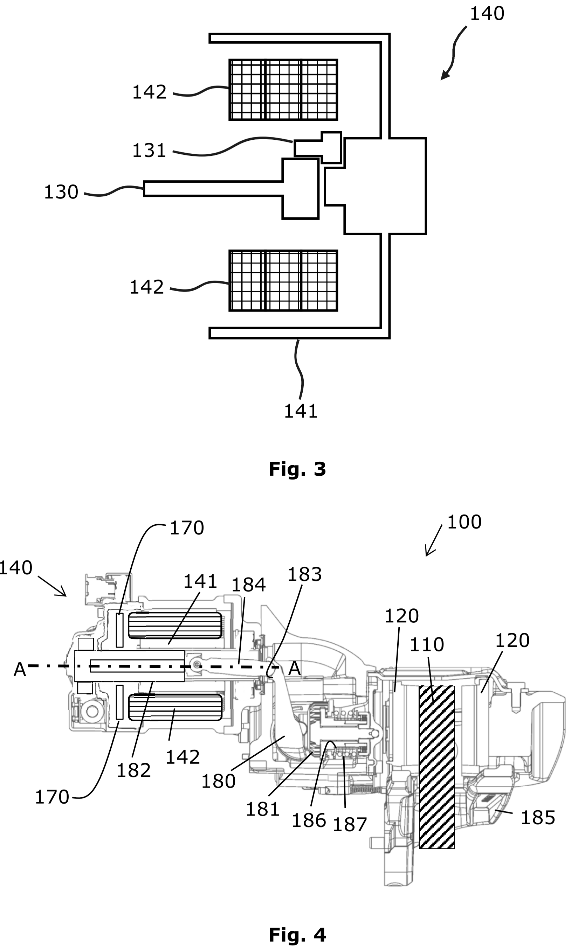

Shown in both Fig. 1 and Fig. 2 is an actuator push rod 130, which may refer to a mechanical component that transmits force to move the brake lining 120 and/or brake surface 110 between the two states. An actuator push rod 130 may be configured to move the brake lining 120 and/or the brake surface 110 between the decelerating state I and the free-running state **II.** It may be conceived as a part of the brake 100, enabling the transition between braking and free-running modes. The actuator push rod 130 may be connected to the electric motor 140 directly (as in Fig. 1 and 2) or through a gear 131, which is shown in Fig. 3. Similarly, the actuator push rod 130 may directly move the brake lining 120 and/or the brake surface 110, or via a gear 131 or other mechanical components transferring the movement.

An electric motor 140 (shown in Fig. 1 - 5) may be understood as a device that converts electrical energy into mechanical energy to drive the actuator push rod 130. It may operate through the interaction between a magnetic field of the electric motor 140 and an electric current in a wire winding to generate force in the form of torque applied on a shaft of the electric motor 140.

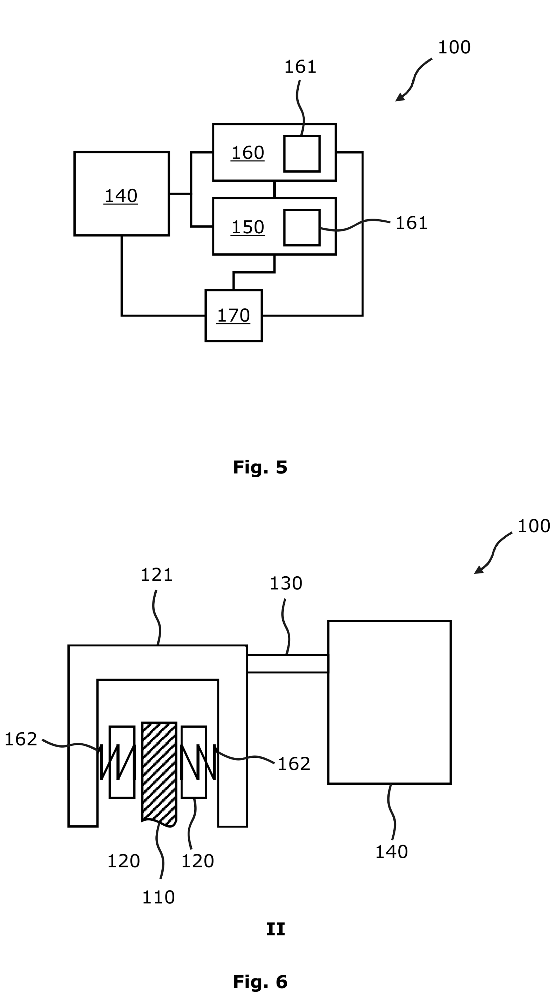

Fig. 5 also shows an energy storage 150 as part of the brake 100. An energy storage 150 may refer to a system or device that stores energy, in particular electric energy, for later use, such as batteries or capacitors 161. In other words, an energy storage 150 may receive and release energy, in particular electric energy.

In summary, the provided brake 100 is precise, has a fast reaction, and is energy efficient. The electric motor 140 allows the quick and precise movement of the actuator push rod 130, which moves the brake linings 120 and/or the brake surface 110 between the decelerating state I and the free-running state II. Further, the advantages of this brake 100 include the ability of the electric motor 140 to function as a generator, allowing for energy recovery when the actuator push rod 130 transitions from the decelerating state I to the free-running state II**.** This recovered energy can be stored in the energy storage 150 system and utilized for future braking actions or other applications.

Now turning to Fig. 3, it is conceivable that the electric motor 140 has a hollow shaft design, wherein a rotor 141 is tubular or cup-shaped, at least partially enclosing a stator 142 and configured to drive the actuator push rod 130.

A hollow shaft design may be understood as a structural configuration where the shaft of the motor 140 is hollow, allowing for a more compact design. This design can facilitate the integration of additional components, such as gears 131, within or adjacent to the motor 140. In the brake 100 shown in Fig. 3, gears 131 transmit the torque provided by the electric motor 140 to the actuator push rod 130. The hollow structure can contribute to weight reduction and improved space efficiency in the overall system.

Fig. 3 also shows a rotor 141. A rotor 141 may refer to the rotating part of the electric motor 140 that interacts with the stator 142 to generate motion. In the example shown in Fig. 3, the rotor 141 is designed to be tubular or cup-shaped, which can enhance the motor's 140 efficiency and performance.

A stator 142 may be understood as the stationary part of the electric motor 140 that generates a magnetic field to interact with the rotor 141. The interaction between the stator and rotor 141 produces the mechanical energy which drives the actuator push rod 130.

A hollow shaft design allows a compact design for more efficient use of space within the vehicle. Additionally, this design enables the arrangement of gears 131 within or adjacent to the motor 140, potentially enhancing the overall performance and responsiveness of the brake.

In the example shown in Fig. 4, the electric motor 140 comprises a radially outer stator 142 and a hollow inner rotor 141. As shown in this example, the brake 100 may have brake carrier 185, locating the brake linings 120 to face first and second opposing braking surfaces of the brake surface 110.

It is conceivable that the actuator push rod 130 is configured to drive a lever 180 that is mechanically connected to the brake lining 120 and/or the brake surface 110. Put differently, the movement of the bake pad 120 and/or brake surface 110 may at least be partially invoked by a lever 180 that is mechanically connected the actuator push rod 130 and the bake pad 120 and/or brake surface 130.

The connection between the lever 180 and the brake lining 120 and/or the brake surface 110 may be direct. It is also conceivable that further mechanical parts are provided to transfer the movement of the lever 180 to a movement of the brake lining 120 and or the brake surface 110. This is illustrated in more detail in Fig. 4. Generally, implementing a lever 180 has the advantage that potential energy may be stored at least partially in the lever 180 and the parts connected thereto when the brake 100 is in the decelerating state I, which can be released when the brake is in the free-running state II.

In Fig. 4, it is illustrated that the brake 100 may comprise a lever 180 that is arranged to rotate about an axis transverse to an axis A-A, in particular an axis of rotation of the electric motor 140. Due to an eccentric, the lever 180 may convert a relatively substantial input displacement from the actuator push rod 130 into a smaller displacement, higher force output to a pair of tappets 181 (one visible) which in turn urge the brake-pad 120 into contact with the brake-disc 110.

A rotary to linear gear mechanism 182 may be provided to drive the linear motion of the lever 180 upon rotation of the electric motor 140. In this embodiment the rotary to linear gear mechanism 182 is located at least partially within the hollow inner rotor 141. This enables the overall length of the electric motor 140 to be reduced.

The upper end of the lever 180 may be provided with a cup-shaped depression 183, which is arranged to receive a pushrod 184 acting as an output from the electric motor 140. As shown in Fig. 4, the pushrod 184 may be mechanically connected to the linear gear mechanism 182.

To account for the wear of the brake linings 120 and maintain a suitable running clearance between the brake linings 120 and the brake surface 110, a wear adjuster mechanism 186 of suitable known type may be arranged to automatically extend the tappets 181 (which may comprise two threadably engaged parts) periodically. A return spring 187 may be provided and configured to urge the tappets 181 and operating shaft 183 back to their rest positions once the decelerating state I has ceased, to restore the running clearance in the free-running state II. Examples of the disc brakes of this type include the applicant's EX+ and ELSA ranges of disc brakes.

In another advantageous example shown in Fig. 5, an inverter 160 may be provided that is configured to provide alternating current to the electric motor 140 for moving the actuator push rod 130 from the free-running state II to the decelerating state I and to at least partially store and/or convert the current generated by the electric motor 140 so that it can be absorbed by the energy storage 150 when the actuator push rod 130 is moved from the decelerating state I to the free-running state II.

In other words, a brake 100 may include an inverter 160 designed to supply alternating current to the electric motor 140 for transitioning the actuator push rod 130 from the free-running state II to the decelerating state I, and to partially store and/or convert the current produced by the electric motor 140 so that it can be stored in the energy storage 150 when the actuator push rod 130 shifts from the decelerating state I to the free-running state II.

An inverter 160 may be understood as an electronic device that converts direct current (DC) into alternating current (AC).

With an inverter 160, alternating current may be provided to the electric motor 140, which enhances operational efficiency. Additionally, the capability to store energy within the inverter 160 contributes to a more compact and efficient design, optimizing space and performance within the brake.

Fig. 5 shows connections, in particular electric connections, that a brake 100 may have. Mechanical components such as the actuator push rod 130 are omitted in Fig. 5.

As shown in Fig. 5, it is conceivable that the inverter 160 comprises at least one capacitor 161, in particular a super capacitor, that is configured to store electric energy that is generated by the electric motor 140. This capacitor may also serve as the energy storage 150.

In other words, the inverter 160 may feature at least one capacitor 161, specifically a super capacitor, designed to store electric energy produced by the electric motor 140.

A capacitor 161 may be understood as an electronic component that stores electrical energy in an electric field. It can charge very quickly and release energy extremely rapidly, making it particularly useful in applications where quick energy delivery is required. This capability is essential in systems that require rapid brake and release actions, such as when anti-lock braking systems (ABS) or other assistance systems are activated.

In particular, the capacitor 161 may be configured as at least one of a double-layer capacitor (EDLCs), a pseudocapacitor, or a hybrid capacitor.

EDLCs have a higher electrostatic double-layer capacitance than electrochemical pseudocapacitance. Pseudocapacitors have a transition metal oxide or conducting polymer electrodes with a high electrochemical pseudocapacitance. Hybrid capacitors may have asymmetric electrodes, one of which exhibits mostly electrostatic and the other mostly electrochemical capacitance, such as lithium-ion capacitors.

The advantages of this brake 100 include the capacitor's 161 ability to charge and discharge quickly, which is especially beneficial during rapid braking and releasing actions. This rapid response enhances the overall performance of the brake 100, ensuring that energy is available precisely when needed, thereby improving safety and efficiency.

It is further thinkable that a controller 170 is provided that is configured to control the electric motor 140, in particular at least one of the direction of rotation, the frequency, or voltage applied.

Put differently, the brake 100 may include a controller 170 designed to manage the electric motor 140, specifically controlling aspects such as the direction of rotation, frequency, or voltage applied.

A controller 170 may be understood as an electronic device that regulates the operation of other components within a system. It can be configured to adjust various parameters, ensuring optimal performance and efficiency.

As shown in the example shown in Fig. 4, the controller may be arranged within a housing of the electric motor 140.

As shown in Fig. 5, the controller 170 may be connected at least to one of the electric motor 140, the inverter 160 or energy storage 150. Not shown in Fig. 5 but also thinkable is that the controller 170 is arranged on one of these devices 140, 150, 160 or forms an integral part of them. Controller 170 may further be connected to an interface of the vehicle, in particular a CAN-bus.

The advantages of this brake 100 include the flexibility of the controller 170's placement, which can be integrated with the electric motor 140 (see Fig. 4), inverter 160, or energy storage 150, or positioned separately from the brake 100. Additionally, the controller 170 can be part of a broader vehicle system, particularly within an assistance system, allowing for coordinated control and improved overall vehicle performance.

In another example, the controller 170 is configured to control the electric motor 140 according to a control signal induced by at least one of a driver, an anti-lock braking system, or an assistance system of the vehicle.

In other words, the controller 170 may be designed to manage the electric motor 140 based on control signals generated by the driver, an anti-lock braking system, or other vehicle assistance systems.

A controller 170 may be understood as an electronic device that regulates the operation of other components within a system. It can be configured to adjust various parameters, ensuring optimal performance and efficiency. In the context of brakes, the controller 170 plays a crucial role in managing the electric motor 140's functions to enhance braking effectiveness.

The advantages of a brake 100 with this controller 170 include the ability of the controller 170 to respond dynamically to various inputs, such as those from the driver or vehicle assistance systems. This responsiveness allows for improved safety and performance, as the brake can adapt to different driving conditions and requirements in real-time, ensuring optimal braking performance when needed.

It is thinkable that the energy storage 150 is configured to provide energy to drive the electric motor 140.

Put differently, the brake 100 may include an energy storage 150 designed to supply energy for operating the electric motor 140. In addition or in the alternative, the energy storage 150 may also provide energy to other systems of the vehicle.

The advantages of this brake 100 include the efficient usage of energy that is recovered when releasing the brake. This capability not only enhances the overall energy efficiency of the vehicle but also contributes to reduced energy consumption, making the brake 100 more sustainable and cost-effective.

It is conceivable that the energy storage 150 is at least configured as an accumulator or as a capacitor 161, in particular as a supercapacitor.

In other words, the energy storage 150 may be configured as either an accumulator or a capacitor 161, specifically a supercapacitor.

An accumulator may be understood as a device that stores energy for later use, typically in the form of chemical energy. It is designed to hold large amounts of energy over extended periods, making it suitable for applications where energy needs to be stored and released gradually. This definition encompasses various types of batteries and energy storage technologies.

A supercapacitor 161 may be understood as a type of capacitor 161 that can store large amounts of energy and is capable of being charged almost instantly while also releasing energy very quickly. Supercapacitors 161 bridge the gap between traditional capacitors 161 and batteries, offering high power density and rapid charge/discharge cycles. This makes them particularly useful in applications requiring quick energy delivery.

In particular, the capacitor 161 may be configured as at least one of a double-layer capacitor (EDLCs), a pseudocapacitor, or a hybrid capacitor.

The advantages of this brake 100 include the ability to store energy effectively, with accumulators providing the capacity to hold large amounts of energy for extended periods. Supercapacitors 161, on the other hand, can be charged almost instantly and release energy rapidly, enhancing the overall responsiveness and efficiency of the brake.

It is also thinkable that the energy storage 150 is at least a power source of the vehicle or a power source dedicated to the brake 100.

Put differently, the energy storage 150 may serve as either a power source for the vehicle or a dedicated power source for the brake 100.

The advantages of this brake 100 include the integration of energy storage 150 as a power source, which can enhance the overall efficiency of the vehicle. By utilizing energy storage 150 dedicated to the brake 100, the brake 100 can ensure that sufficient power is available for braking operations, improving responsiveness and reliability. This setup can also reduce the load on the vehicle's main power source, leading to better energy management and potentially extending the lifespan of the vehicle's power systems.

In another example that is e.g. shown in Fig. 6 (also in Fig. 1 and 2), a mechanical energy storage may be provided that is configured to mechanically store at least a part of the energy that is generated by the electric motor 140 to move the brake lining 120 and/or the brake surface 110 from the free-running state II to the decelerating state I.

In other words, a brake 100 may include a mechanical energy storage designed to store a portion of the energy generated by the electric motor 140 for the purpose of moving the brake lining 120 and/or brake surface 110 from the free-running state II to the decelerating state I.

In the example shown in Fig. 6, the mechanical energy storage may be separate from the mechanical energy storage that is provided by a system of brake surface 110, brake lining 120, and actuator push rod 130, (e.g. shown in Fig. 1 and Fig. 2) which may also store mechanical energy, e.g., by compression or twisting.

A mechanical energy storage may be understood as a system that retains energy in a mechanical form, such as through the compression of springs or the elevation of weights. This type of storage allows for the energy to be released when needed, providing a reliable source of power for various applications.

This provides the ability to store energy mechanically and release it to the electric motor 140 when the motor operates as a generator. This capability not only improves energy efficiency but also contributes to the overall performance of the brake, ensuring that energy is available for braking actions when required.

In yet another example, the mechanical energy storage has an elastic part that stores mechanical energy in an elastic deformation.

An elastic part may be understood as a component that can deform under stress and return to its original shape when the stress is removed. This property allows for the efficient storage of energy, as the elastic deformation can capture and release energy effectively.

The ability of the elastic part to store mechanical energy efficiently allows to provide energy for moving the electric motor to generate electric energy. Additionally, the use of elastic deformation can contribute to a more compact design, optimizing space within the brake.

It is also thinkable that the elastic part is configured as at least one of an elastic part of the brake lining 120 and/or the brake surface 110, or a spring 162.

In other words, the elastic component may be part of the brake lining 120, brake surface 110, or a separate spring 162. In Fig. 6, each brake lining 120 is connected to the brake caliper 121 via a spring 162. This means that a predetermined amount of mechanical energy is needed to compress the springs 162 for the brake linings 120 to get into the decelerating state I. This mechanical energy is then released and can be used to generate electrical energy via the electric motor 140 when the brake linings 120 move back into the free-running state II.

A brake 100 of this kind with the versatility of the elastic part allows the latter to be incorporated into various components such as the brake lining 120, brake surface 110, or as a standalone spring. This flexibility permits optimized energy absorption and release, improving the overall responsiveness of the brake. Additionally, using elastic materials can help reduce wear on other components, leading to enhanced durability and maintenance efficiency.

It is also thinkable that the mechanical energy storage has a flywheel (not shown) that stores mechanical energy in a rotation.

This means that the mechanical energy storage may be featuring a flywheel designed to store mechanical energy through rotational motion.

A flywheel may be understood as a mechanical device that stores energy in the form of kinetic energy by rotating at high speeds. This energy can be released when needed, providing a reliable source of power for various applications.

The flywheel can store significant amounts of energy in a compact form, allowing for quick release of energy when required. This capability can improve the overall efficiency and responsiveness of the brake, particularly during rapid braking events. Additionally, flywheels can contribute to smoother operation by providing a steady energy supply, reducing fluctuations in power delivery.

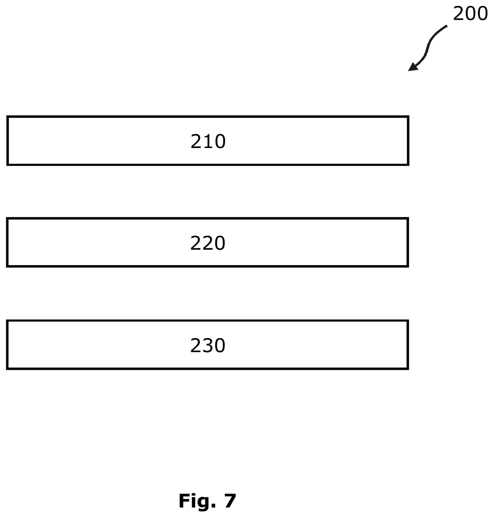

Fig. 7 shows another aspect of the invention, a method 200 for providing deceleration. According to Fig. 7, a method 200 is provided for providing deceleration 200, in particular of a vehicle, with a brake 100, in particular a brake 100 according to the invention, comprising providing a brake surface 110 and a brake lining 120, wherein in a decelerating state I, the brake lining 120 and the brake surface 110 are in contact, and in a free-running state II, the brake lining 120 and the brake surface 110 are spaced apart, and an electric motor 140 that is connected to an actuator push rod 130 and configured to provide the energy to move the actuator push rod 130 from the free-running state II to the decelerating state I, braking by moving the brake lining 120 and/or the brake surface 110 from the free-running state II to the decelerating state I through the actuator push rod 130 that is driven by the electric motor 140, wherein the electric motor 140 is at least partially powered by an energy storage 150, releasing by moving the brake lining 120 and/or the brake surface 110 from the decelerating state I to the free-running state II wherein the electric motor 140 acts as a generator, wherein the generated energy is stored in the energy storage 150.

The method 200 may be computer-implemented. It may be provided that the steps of the method are executed in the specified or a different order. It may also be provided that some or all of the steps of the method are executed repeatedly.

The method 200 according to the invention offers all the advantages described in connection with the brake 100 according to the invention.

In another example, controlling the electric motor 140 may be provided according to a control signal induced by at least one of a driver, an anti-lock braking system, or an assistance system of the vehicle.

In other words, the method 200 may include the additional step of managing the electric motor 140 based on control signals generated by the driver, an anti-lock braking system, or other vehicle assistance systems.

This way, a dynamic response to various inputs from the driver or vehicle assistance systems can be provided. This responsiveness allows for improved safety and performance, ensuring that the brake can adjust to different driving conditions and requirements in real-time. By integrating control signals from multiple sources, the system can optimize braking performance, enhancing overall vehicle stability and driver confidence.

It is also conceivable that the method 200 further comprises providing alternating current to the electric motor 140 with an inverter 160 for moving the actuator push rod 130 from the free-running state II to the decelerating state I, and/or at least partially storing and/or converting the current generated by the electric motor 140 so that it can be absorbed by the energy storage 150 when the actuator push rod 130 is moved from the decelerating state I to the free-running state II.

Put differently, the method may include the additional steps of supplying alternating current to the electric motor 140 via an inverter 160 to facilitate the movement of the actuator push rod 130 from the free-running state II to the decelerating state I, and/or managing the current generated by the electric motor 140 to ensure it can be stored in the energy storage 150 when transitioning back to the free-running state II.

This provides the advantage that an efficient operation of the electric motor 140 is ensured, as providing alternating current allows for smoother and more effective control of the actuator push rod 130. Additionally, the ability to store and convert the generated current enhances the overall energy efficiency of the system, ensuring that energy is effectively captured and reused. This capability not only improves the performance of the brake but also contributes to the sustainability of the vehicle's energy management.

In another aspect of the invention, a computer program product is provided, comprising instructions which, when the program is executed by a computer, in particular a controller 170 of a brake 100 according to the invention, cause the computer to carry out the method according to the invention, in particular sending control signals to control the electric motor 140 to braking and/or releasing.

Thus, the computer program product according to the invention offers all the advantages described in connection with the brake 100 and/or the method according to the invention.

In yet another aspect of the invention, a computer-readable storage medium is provided, comprising instructions which, when the program is executed by a computer, in particular a controller 170 of a brake 100 according to the invention, cause the computer to carry out the method according to the invention, in particular sending control signals to control the electric motor 140 to braking and/or releasing.

Thus, the computer-readable storage medium according to the invention offers all the advantages described in connection with the brake 100 and/or the method and/or the computer program product according to the invention.

In a further aspect of the invention, a control system may be provided which comprises one or more controllers collectively comprising at least one electronic processor having an electrical input for receiving an input signal and at least one memory device electrically coupled to the at least one electronic processor and having instructions stored therein. The at least one electronic processor is configured to access the at least one memory device and execute the instructions thereon to carry out the method according to the invention.

Thus, the control system according to the invention offers all the advantages described in connection with the brake 100 and/or the method and/or the computer program product and/or the computer-readable storage medium according to the invention.

Where the word 'or' appears, this is to be construed to mean 'and/or'. This is such that items referred to are not necessarily mutually exclusive and may be used in any appropriate combination.

The invention has been described above with reference to one or more specific embodiments. However, the description is not exhaustive, and the present invention is not limited to the embodiments described. Various changes and modifications can be made without departing from the scope of the invention as defined in the claims.

## Claims

1. A brake (100) for providing deceleration, in particular of a vehicle, comprising:
a brake surface (110) and a brake lining (120), wherein in a decelerating state (I), the brake lining (120) and the brake surface (110) are in contact, and in a free-running state (II), the brake lining (120) and the brake surface (110) are spaced apart,
an electric motor (140) that is connected to an actuator push rod (130) and configured to provide the energy to move the actuator push rod (130) from the free-running state (II) to the decelerating state (I),
wherein the electric motor (140) is further configured to operate as a generator and provide energy to an energy storage (150) when the actuator push rod (130) is moved from the decelerating state (I) to the free-running state (II).

2. The brake (100) according to claim 1,
wherein the actuator push rod (130) is configured to drive a lever (180) that is mechanically connected to the brake lining (120) and/or the brake surface (110).

3. The brake (100) according to claim 1 or 2,
wherein an inverter (160) is provided that is configured to provide alternating current to the electric motor (140) for moving the actuator push rod (130) from the free-running state (II) to the decelerating state (I) and
to at least partially store and/or to convert the current generated by the electric motor (140) so that it can be absorbed by the energy storage (150) when the actuator push rod (130) is moved from the decelerating state (I) to the free-running state (II) , optionally
wherein the inverter (160) comprises at least one capacitor (161), in particular a super capacitor, that is configured to store electric energy that is generated by the electric motor (140).

4. The brake (100) according to any previous claim,
wherein a controller (170) is provided that is configured to control the electric motor (140), in particular at least one of the direction of rotation, the frequency or voltage applied,
optionally wherein the controller (170) is configured to control the electric motor (140) according to a control signal induced by at least one of a driver, an anti-lock braking system or an assistance system of the vehicle.

5. The brake (100) according to any previous claim,
wherein the energy storage (150) is configured to provide energy to drive the electric motor (140).

6. The brake (100) according to any previous claim,
wherein the energy storage (150) is at least configured as an accumulator or as a capacitor, in particular as a supercapacitor.

7. The brake (100) according to any previous claim,
wherein the energy storage (150) is at least a power source of the vehicle or a power source dedicated to the brake (100).

8. The brake (100) according to any previous claim,
wherein a mechanical energy storage (160) is provided that is configured to mechanically store at least a part of the energy that is generated by the electric motor (140) to move the brake lining (120) and/or the brake surface (110) from the free-running state (II) to the decelerating state (I).

9. The brake (100) according to claim 8,
wherein the mechanical energy storage (160) has an elastic part (161) that stores mechanical energy in an elastic deformation,
optionally wherein the elastic part (161) is configured as at least one of an elastic part of the brake lining (120) and/or the brake surface (110), or a spring (162).

10. The brake (100) according to claim 8 or claim 9,
wherein the mechanical energy storage (160) has a flywheel (162) that stores mechanical energy in a rotation.

11. A method (200) for providing deceleration, in particular of a vehicle, with a brake (100), in particular according to one of the preceding claims, comprising:
providing (210) a brake surface (110) and a brake lining (120), wherein in a decelerating state (I), the brake lining (120) and the brake surface (110) are in contact, and in a free-running state (II), the brake lining (120) and the brake surface (110) are spaced apart, an electric motor (140) that is connected to an actuator push rod (130) and configured to provide the energy to move the actuator push rod (130) from the free-running state (II) to the decelerating state (I),
braking (220) by moving the brake lining (120) and/or the brake surface (110) from the free-running state (II) to the decelerating state (I) through the actuator push rod (130) that is driven by the electric motor (140), wherein the electric motor (140) is at least partially powered by an energy storage (150),
releasing (230) by moving the brake lining (120) and/or the brake surface (110) from the decelerating state (I) to the free-running state (II) wherein the electric motor (140) acts as a generator, wherein the generated energy is stored in the energy storage (150).

12. The method (200) according to claim 11, further comprising
controlling the electric motor (140) according to a control signal induced by at least one of a driver, an anti-lock braking system or an assistance system of the vehicle.

13. The method (200) according to claim 11 or claim 12, further comprising
provide alternating current to the electric motor (140) with an inverter (160) for moving the actuator push rod (130) from the free-running state (II) to the decelerating state (I), and/or at least partially store and/or convert the current generated by the electric motor (140) so that it can be absorbed by the energy storage (150) when the actuator push rod (130) is moved from the decelerating state (I) to the free-running state (II).

14. A computer program product comprising instructions which, when the program is executed by a computer, in particular a controller (170) of a brake (100) according to any of claims 4 to 10, cause the computer to carry out the method (200) of claim 11, in particular sending control signals to control the electric motor (140) to braking (220) and/or releasing (230).

15. A computer-readable storage medium comprising instructions which, when the program is executed by a computer, in particular a controller (170) of a brake (100) according to any of claims 4 to 10, cause the computer to carry out the method (200) of claim 11, in particular sending control signals to control the electric motor (140) to braking (220) and/or releasing (230).
